# EUROPÄISCHE PATENTANMELDUNG

(11) **EP 2 296 431 A1**
(43) Veröffentlichungstag der Anmeldung: **16.03.2011**
(21) Anmeldenummer: 10175011.5
(22) Anmeldetag: 02.09.2010
(51) Int. Cl.: H05B 3/22, H05B 3/68

(54) **Garraumvorrichtung mit CNT-Heizelement**

(30) Priorität: 15.09.2009 DE 102009029464
(71) Anmelder: BSH Bosch und Siemens Hausgeräte GmbH, 81739 München (DE)
(72) Erfinder: Brunner, Franz, 83101 Rohrdorf (DE); Erdmann, Klaus, 27616 Heerstedt-Lohe (DE); Jennings, Aric, New Bern, NC 28561-2231 (US); Theine, Markus, 83355 Grabenstätt (DE)

(57) **Zusammenfassung**

Die Erfindung geht aus von einer Garraumvorrichtung mit zumindest einer Garraumeinheit (10; 52; 76), die zumindest ein Heizelement (12, 14; 54, 56; 78) aufweist.

Um eine Vorrichtung mit verbesserten Eigenschaften hinsichtlich Handhabung, Gewicht und Temperaturträgheit zu realisieren, die zugleich einen hohen Bedienkomfort bereitstellt, wird vorgeschlagen, dass das zumindest eine Heizelement (12, 14; 54, 56; 78) zumindest eine CNT-Schicht (16, 18; 58, 60; 82) aufweist, die CNT (Carbon Nano Tubes)-Bestandteile umfasst.

## Beschreibung

Die Erfindung betrifft eine Garraumvorrichtung nach dem Oberbegriff des Anspruchs 1.

Aus der Druckschrift DE 42 17 545 A1 ist ein elektrischer Backofen mit einer Garraum-Teilungsplatte bekannt, die mit zwei Heizelementen ausgestattet ist, die eine Unterhitze eines oberen Garraumbereichs und eine Oberhitze eines unteren Garraumbereichs bereitstellen.

Die Aufgabe der Erfindung besteht insbesondere darin, eine gattungsgemäße Vorrichtung mit verbesserten Eigenschaften hinsichtlich Handhabung, Gewicht und Temperaturträgheit bereitzustellen und einen Bedienkomfort zu erhöhen.

Die Aufgabe wird gemäß der Erfindung durch die Merkmale des Anspruchs 1 gelöst, während vorteilhafte Ausgestaltungen und Weiterbildungen der Erfindung den Unteransprüchen entnommen werden können.

Die Erfindung geht aus von einer Garraumvorrichtung mit zumindest einer Garraumeinheit, die zumindest ein Heizelement aufweist. Unter einer "Garaumeinheit" soll in diesem Zusammenhang insbesondere eine Einheit verstanden werden, die dazu vorgesehen ist, während eines Betriebs des Gargeräts zur Erzielung eines gewünschten Garergebnisses oder einer gewünschten Temperaturverteilung in einem Garraum angeordnet zu werden, insbesondere Gargutträger, Garraumteiler, Heizebenen oder Elemente, die als Kombinationen davon ausgebildet sind. Dabei soll unter einem "Gargutträger" in diesem Zusammenhang insbesondere ein Element verstanden werden, das während eines Garvorgangs ein Gargut durch unmittelbaren Kontakt mit diesem trägt. Unter einem "Gargut" soll in diesem Zusammenhang insbesondere sowohl ein zu garendes Lebensmittel als auch ein zu garendes Lebensmittel in einem zu einer Garung von Lebensmitteln speziell vorgesehenen oder ausgestatteten Garbehälter, beispielsweise ein Kochtopf, ein Bräter oder eine Auflaufschale, verstanden werden. Unter einem "Garraumteiler" soll in diesem Zusammenhang insbesondere ein Element verstanden werden, das dazu vorgesehen ist, den Garraum in zumindest zwei Teilräume, insbesondere in einer horizontalen Teilung, zu trennen und das insbesondere zu einer thermischen Trennung der zumindest zwei Teilräume eine thermische Isolierung und zu einer weitgehenden Verhinderung eines Stoffaustauschs zwischen den beiden Teilräumen ein Dichtungselement aufweisen kann. Untere einer "Heizebene" soll in diesem Zusammenhang insbesondere ein Element verstanden werden, das zumindest ein Heizelement aufweist, das im Wesentlichen in einer Ebene, insbesondere in eine horizontalen Ebene, ausgerichtet ist.

Es wird vorgeschlagen, dass das zumindest eine Heizelement zumindest eine CNT-Schicht aufweist, die CNT (Carbon Nano Tubes)-Bestandteile umfasst. Dabei sollen in diesem Zusammenhang unter "Carbon Nano Tube-Bestandteilen" (CNT-Bestandteile) insbesondere Bestandteile mit Kohlenstoffröhrchen verstanden werden, die einen Durchmesser von weniger als 100 Nanometer und besonders bevorzugt von weniger als 50 Nanometer aufweisen. Dadurch kann ein Heizelement mit einer flachen Bauweise, geringem Gewicht, einer kurzen Aufheizzeit und mit Energieersparnis durch geringe Wärmekapazität mit flexiblen Ausgestaltungs- und Designmöglichkeiten bereitgestellt werden. Vorteilhaft kann die zumindest eine CNT-Schicht mit einer elektrisch isolierenden Schicht abgedeckt sein, besonders bevorzugt kann sie zwischen zwei elektrisch isolierenden Schichten angeordnet sein.

In einer vorteilhaften Ausgestaltung umfasst die zumindest eine Garraumeinheit neben der zumindest einen CNT-Schicht zumindest eine Schicht aus einem glaskeramischen Material. Unter einem "glaskeramischen Material" soll in diesem Zusammenhang insbesondere ein an sich bekanntes Material verstanden werden, das mit einem teilweise polykristallinen und einem teilweise glasartigen Aufbau aus einer Glasschmelze hergestellt wird und eine gute Transparenz für Wärmestrahlung aufweist. Diese Materialien sind insbesondere als Material für Kochfelder bekannt und bewährt. Durch einen solchen Schichtaufbau kann bei entsprechender Ausgestaltung eine Garraumeinheit bereitgestellt werden, die eine bekannt gute Isolationseigenschaft hinsichtlich einer Wärmeleitung aufweist, für Wärmestrahlung gut durchlässig ist und außerdem einfach herstellbar und gut zu reinigen ist. Vorzugsweise kann die zumindest eine Schicht aus einem glaskeramischen Material der zumindest eine CNT-Schicht als Träger dienen.

In einer weiteren vorteilhaften Ausgestaltung umfasst die zumindest eine Garraumeinheit zumindest eine Schicht aus einem metallischen Werkstoff. Durch eine Verwendung des metallischen Werkstoffs kann eine gleichmäßige Oberflächentemperatur der zumindest einen Garraumeinheit und eine gleichmäßige Garung erzielt werden. Außerdem kann auf diese Weise eine einfach herstellbare, kostengünstige und leicht zu reinigende Garraumeinheit realisiert werden.

Wenn die zumindest eine Garraumeinheit ein Gehäuse aus einem metallischen Werkstoff umfasst, kann bei entsprechender Ausgestaltung vorteilhaft zum Zweck einer Garung eine Möglichkeit eines Direktkontakts von Gargut zur Oberfläche der Garraumeinheit bereitgestellt werden.

Mit besonderem Vorteil sind das Gehäuse aus einem metallischen Werkstoff und die zumindest eine Schicht aus einem metallischen Werkstoff einteilig ausgebildet oder das Gehäuse ist in direktem elektrischen und/oder thermischen Kontakt mit der zumindest einen Schicht aus einem metallischen Werkstoff verbunden. Auf diese Weise kann die Garung des Garguts mit Direktkontakt mit der zumindest einen Garraumeinheit mit vorteilhaft gleichmäßiger Gartemperatur durchgeführt werden.

Zudem wird vorgeschlagen, dass die zumindest eine Garraumeinheit zumindest zwei Heizelemente umfasst. Dadurch können vorteilhaft beide Oberflächen der zumindest einen Garraumeinheit jeweils mit einem Heizelement beheizt werden.

Wenn die zumindest zwei Heizelemente der zumindest einen Garraumeinheit dazu vorgesehen sind, voneinander unabhängig angesteuert zu werden, können vorteilhaft die beiden Oberflächen der Garraumeinheit in unterschiedlicher Weise beheizt werden. Weiterhin können sich, abhängig von einer Ausgestaltung eines Gargeräts, in dem die Garraumvorrichtung eingesetzt ist, weitere Möglichkeiten zur Garung eröffnen. Beispielsweise kann bei einer Ausstattung des Gargeräts mit einem in einer Garraumdecke integrierten Heizelement zur Bereitstellung einer Oberhitze und einem in einem Garraumboden integrierten Heizelement zur Bereitstellung einer Unterhitze in einem oberen Teilgarraum oberhalb der Garraumeinheit mit einer durch das in der Garraumdecke integrierte Heizelement gebildeten Oberhitze und einer durch ein Heizelement der Garraumeinheit gebildeten Unterhitze gegart werden. In einem unteren Teilgarraum unterhalb der Garraumeinheit kann eine Garung mit einer durch das in dem Garraumboden integrierte Heizelement gebildeten Unterhitze und einer durch ein Heizelement der Garraumeinheit gebildeten Oberhitze ermöglicht werden.

Wenn zwischen den zumindest zwei Heizelementen der zumindest einen Garraumeinheit zumindest eine thermische Isolationsschicht angeordnet ist, kann eine gute Trennung der Heizwirkungen der zumindest zwei Heizelemente erreicht werden. Durch eine entsprechende Ausgestaltung eines Gargeräts können vorteilhaft zwei thermisch isolierte Teilgarräume mit unterschiedlichen Temperaturen zur gleichen Zeit bereitgestellt werden. Wenn die zumindest zwei Heizelemente jeweils zumindest eine Schicht aus einem glaskeramischen Material aufweisen, kann die zumindest eine thermische Isolationsschicht vorzugsweise von einem metallischen Werkstoff gebildet sein, der in einem Infrarotbereich elektromagnetischer Strahlung ein Reflexionsvermögen von vorteilhaft mehr als 80 Prozent, bevorzugt mehr als 90 Prozent und besonders bevorzugt mehr als 95 Prozent aufweist. Wenn die zumindest zwei Heizelemente jeweils zumindest eine Schicht aus einem metallischen Werkstoff aufweisen, kann die zumindest eine thermische Isolationsschicht vorzugsweise von einem Material mit einer Wärmeleitfähigkeit von weniger als 2 W/(m x K), bevorzugt von weniger als 0,1 W/(m x K), besonders bevorzugt von weniger als 0,05 W/(m x K) und insbesondere von einem glaskeramischen Material gebildet sein.

Ferner wird vorgeschlagen, dass die zumindest eine Garraumeinheit ein an einem Außenrand im Wesentlichen umlaufendes Dichtungselement aufweist. Unter "im Wesentlichen umlaufend" soll in diesem Zusammenhang insbesondere verstanden werden, dass eine Ausstattung der zumindest einen Garraumeinheit mit einem Dichtungselement vorteilhaft wenigstens 80 Prozent, besonders vorteilhaft wenigstens 90 Prozent einer Gesamtlänge des Außenrands beträgt. Durch die umlaufende Dichtungseinheit kann vorteilhaft eine verbesserte thermische Isolation durch eine weitgehende Vermeidung einer Luftkonvektion am Außenrand der zumindest einen Garraumeinheit erreicht werden.

Außerdem wird vorgeschlagen, dass die zumindest eine Garraumeinheit als Garraumteiler ausgebildet ist, wodurch das Garraumvolumen auf eine Gargutgröße angepasst und eine erhebliche Energieersparnis und kürzere Aufheizzeiten erzielt werden können. Weiterhin können in einer entsprechenden Ausgestaltung vorteilhaft mehrere, gleichzeitig betreibbare Garzonen mit unterschiedlichen Bedingungen bereitgestellt werden. Bei einer Ausstattung der zumindest einen Garraumeinheit mit einer umlaufenden Dichtungseinheit kann vorteilhaft ein Stoffaustausch zwischen Teilgarräumen weitgehend vermieden und eine Temperatur- und Aromaisolation zur Garung unterschiedlicher Gargüter in den Teilgarräumen erzielt werden.

In einer vorteilhaften Ausgestaltung weist die zumindest eine Garraumeinheit eine Bauhöhe von weniger als 16 mm auf. Unter einer "Bauhöhe" soll in diesem Zusammenhang insbesondere eine Höhe verstanden werden, die senkrecht zu einer Oberfläche der Garraumeinheit, außerhalb eines Randbereichs, der eine Breite von 5 Prozent einer Gesamtbreite aufweist, bestimmt wird. Durch die geringe Bauhöhe kann vorteilhaft eine gute Handhabung der Garraumeinheit erreicht und eine gute Ausnutzung eines Garraumvolumens erzielt werden.

Es wird ein Gargerät, insbesondere ein Backofen, mit einem Garraum und mit zumindest einer der beschriebenen Garraumvorrichtungen vorgeschlagen, das eine Stromversorgungseinheit aufweist, die dazu vorgesehen ist, in zumindest zwei unterschiedlichen Höhenebenen des Garraums eine elektrische Stromversorgung der zumindest einen Garraumvorrichtung bereitzustellen. Dadurch kann der Garraum des Gargeräts in flexibler Weise aufgeteilt und als Teilgarraum an eine Größe des Garguts angepaßt werden, wodurch Zeit und Energie zur Garung eingespart werden kann. In einer entsprechenden Ausgestaltung kann ein Gargerät mit unterschiedlichen Betriebsarten und -zonen bereitgestellt werden. Vorzugsweise können die elektrischen Stromversorgungselemente von Steckkontakten gebildet sein, die mit entsprechend ausgeführten Kontakten der zumindest einen Garraumeinheit korrespondieren. Alternativ ist auch eine Verwendung von flexiblen elektrischen Leitungen denkbar. Grundsätzlich sind aber auch andere, dem Fachmann sinnvoll erscheinende Mittel zur Stromversorgung der zumindest einen Garraumeinheit wie etwa eine induktive Übertragung von Energie gemäß der Art induktiver Kochfelder möglich.

Des Weiteren wird vorgeschlagen, dass das Gargerät zumindest eine Sensiereinheit umfasst, die dazu vorgesehen ist, eine betriebsbereite Position der zumindest einen Garraumvorrichtung zu erfassen. Dadurch kann ein sicherer Betrieb der zumindest einen Garraumeinheit erreicht werden. Vorteilhaft können beispielsweise elektrische Schaltelemente des Gargeräts zur Stromversorgung der zumindest einen Garraumeinheit abhängig von einem Signal der zumindest einen Sensiereinheit aktiviert oder deaktiviert werden.

Wenn das Gargerät eine Steuereinheit umfasst, die dazu vorgesehen ist, zumindest aufgrund eines Signals der Sensiereinheit von einem Betriebsmodus in einen anderen Betriebsmodus zu wechseln, kann ein besonders sicherer und komfortabler Betrieb des Gargeräts und der zumindest einen Garraumeinheit erreicht werden. Unter einer "Steuereinheit" soll in diesem Zusammenhang insbesondere ein Gerät mit einer Recheneinheit, einer Speichereinheit, einem darin gespeicherten Betriebsprogramm und/oder einem darin gespeicherten Anwendungsprogramm verstanden werden. Vorzugsweise kann die Steuereinheit dazu vorgesehen sein, einen Wechsel des Betriebsmodus in einer Anzeigeeinheit anzuzeigen und/oder dazu, Funktionseigenschaften von Bedienelementen zu verändern und die Veränderung in der Anzeigeeinheit anzuzeigen.

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Explosionsansicht einer Garraumvorrichtung mit einer als Garraumteiler ausgebildeten Garraumeinheit,
- Fig. 2: die Garraumvorrichtung gemäß der Fig. 1 in einer Schnittdarstel- lung,
- Fig. 3: eine Ansicht einer Rückseite der Garraumvorrichtung gemäß der Fig. 1,
- Fig. 4: eine Detailansicht einer weiteren Garraumvorrichtung mit einer als Garraumteiler ausgebildeten Garraumeinheit in einer Schnittdar- stellung,
- Fig. 5: eine Detailansicht einer weiteren Garraumvorrichtung in einer Schnittdarstellung und
- Fig. 6: ein von einem Backofen gebildetes Gargerät mit einer Garraum- vorrichtung gemäß der Fig. 1.

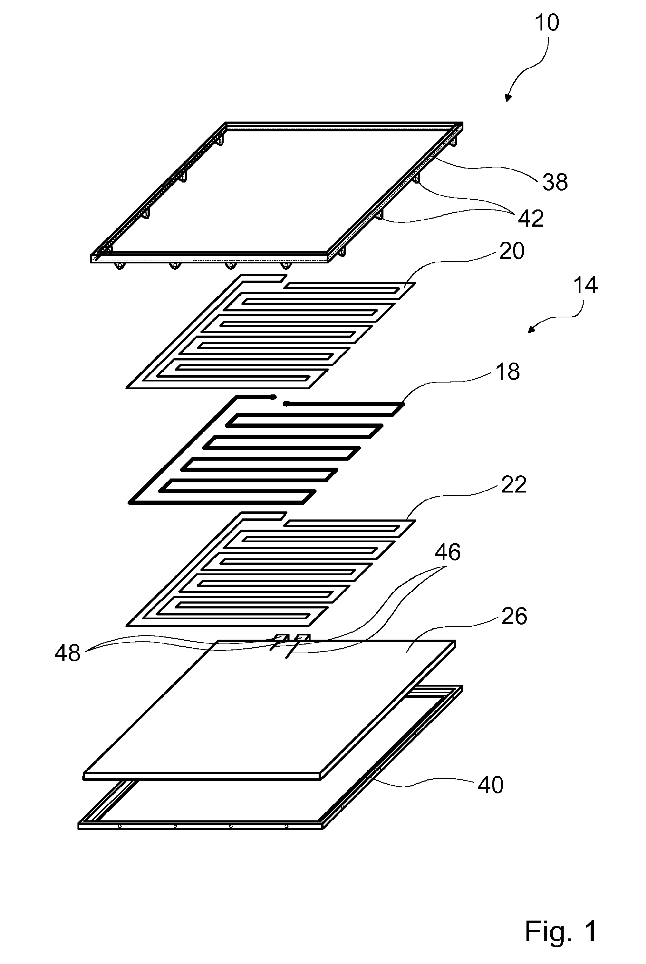

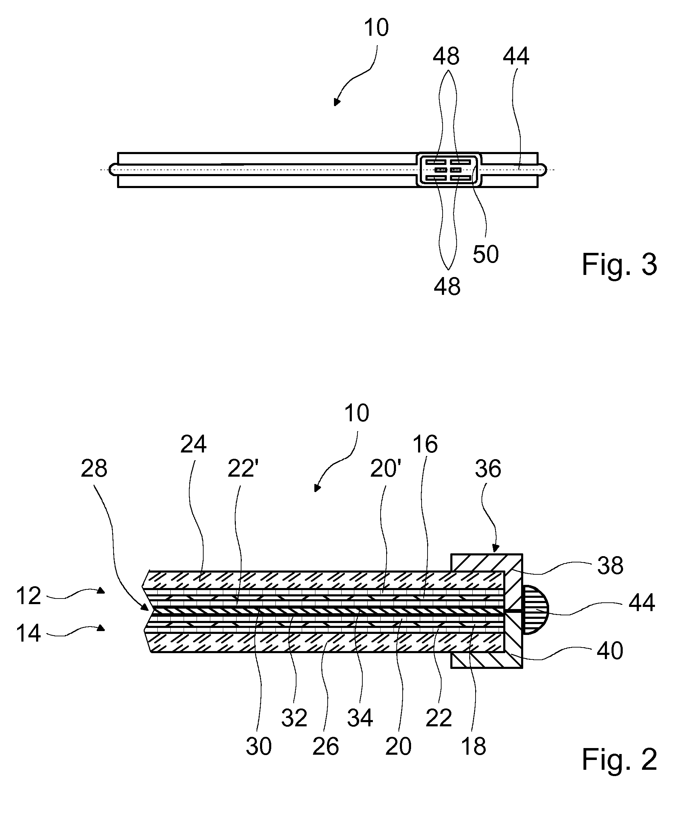

Fig. 1 zeigt eine Explosionsansicht einer Garraumvorrichtung mit einer als Garraumteiler ausgebildeten Garraumeinheit 10, die zwei Heizelemente 12, 14 aufweist, die jeweils eine CNT-Schicht 16, 18 mit CNT (Carbon Nano Tubes)-Bestandteilen umfassen. Aus Gründen der Übersicht ist nur ein Heizelement 14 der Garvorrichtung dargestellt; eine vollständige Darstellung der Schichtfolge wird in Fig. 2 beschrieben. Jede der CNT-Schichten 16, 18 ist in einer Mäanderform zwischen zwei elektrischen Isolierschichten 20, 22 angeordnet, und jede dieser Schichtfolgen ist auf je einer rechteckigen Platte 24, 26 aus einem glaskeramischen Material aufgebracht. Die Fig. 1 zeigt nur die untere Platte 26 der beiden rechteckigen Platten 24, 26.

In Fig. 2 ist ein Detail der Garraumvorrichtung gemäß der Fig. 1 in einer Schnittdarstellung gezeigt. Die beiden Platten 24, 26 aus glaskeramischem Material sind horizontal parallel und so zueinander ausgerichtet, dass die beiden Heizelemente 12, 14 sich zwischen den beiden Platten 24, 26 aus glaskeramischem Material befinden. Zwischen den beiden Heizelementen 12, 14 ist eine thermische Isolationsschicht 28 angeordnet, die zwei Metallfolien 30, 32 umfasst, zwischen denen eine Lage aus Schaumglas 34 angeordnet ist. Am Rand der Garraumeinheit 10 ist ein Metallrahmen 36 angebracht, der an einer Oberseite der oberen glaskeramischen Platte 24 und an einer Unterseite der unteren glaskeramischen Platte 26 angreift und Außenkanten der glaskeramischen Platten 24, 26 vor einer Beschädigung schützt. Zur Verringerung einer Wärmeleitung ist der Metallrahmen 36 aus einem oberen Halbrahmen 38 und einem unteren Halbrahmen 40 gebildet, die an Überlappungsstellen 42 mit Schraubelementen zu einem U-förmigen Profil verbunden sind (Fig. 1). Ein an Seitenflächen der Garraumeinheit 10 umlaufendes Dichtungselement 44 (Fig. 2) ist an den Metallrahmen 36 zur weitgehenden Vermeidung einer Luftkonvektion und zu einem gleichzeitigen Schutz eines Innenbereichs der Garraumeinheit 10 vor Verschmutzung angeformt. Außerhalb des Metallrahmens 36 weist die Garraumeinheit 10 eine Bauhöhe von 15 Millimetern auf.

Zur Stromversorgung der beiden Heizelemente 12, 14 sind die beiden CNT-Schichten 16, 18 mit Zuleitungskontaktierungen 46 ausgestattet, die zu Kontaktelementen 48 in einem Steckerelement 50 an einer Rückseite des Garraumteilers geführt sind (Fig. 1). Die beiden Heizelemente 12, 14 der Garraumeinheit 10 sind dazu vorgesehen, voneinander unabhängig angesteuert zu werden, was durch eine Einzelkontaktierung besonders einfach realisiert werden kann. Das Steckerelement 50 ist vom Dichtungselement 44 umfasst (Fig. 3).

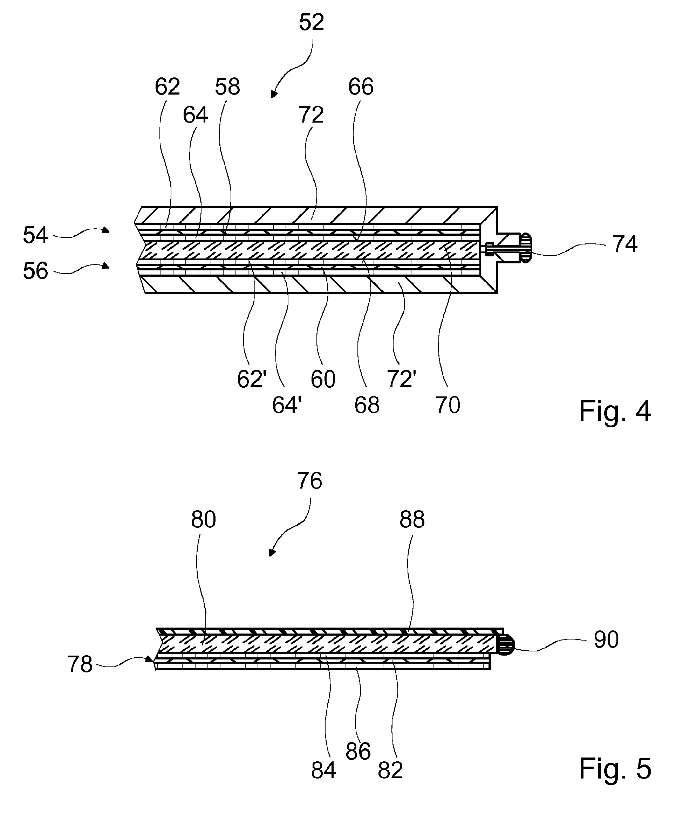

In Fig. 4 ist ein weiteres Ausführungsbeispiel einer Garraumvorrichtung mit einer als aktiver, mit zwei Heizelementen 54, 56 ausgestatteter Garraumteiler ausgebildeten Garraumeinheit 52 wiedergegeben. Auf den beiden Oberflächen 66, 68 einer rechteckigen Platte 70 aus einem glaskeramischen Material ist je ein Heizelement 54, 56 aufgebracht, das jeweils eine zwischen zwei elektrischen Isolierschichten 62, 64 angeordnete CNT-Schicht 58, 60 mit CNT (Carbon Nano Tubes)-Bestandteilen aufweist. Die Garraumeinheit 52 umfasst zwei Schichten aus einem metallischen Werkstoff, die jeweils einteilig mit je einer rechteckförmigen Halbschale 72, 72' aus Edelstahl ausgebildet sind, die ein Gehäuse für die Platte 70 aus einem glaskeramischen Material und die zwei Heizelemente 54, 56 bilden. An einer Trennfläche der beiden Halbschalen 72, 72' ist ein umlaufendes Dichtungselement 74 angespritzt, das dazu vorgesehen ist, gleichzeitig eine weitgehende Vermeidung eines Luftaustauschs, einen Schutz eines Innenbereichs der Garraumeinheit 52 vor Verschmutzung und eine thermische Trennung der beiden Halbschalen 72, 72' zu bewirken. Durch das Gehäuse aus Edelstahl und eine gleichmäßige Oberflächentemperatur ist eine gleichmäßige Garung bei einem Direktkontakt von Gargut zur Oberfläche der Garraumeinheit 52 möglich. Außerdem lassen sich die Oberflächen der Garraumeinheit 52 auf einfache Weise reinigen.

Zur Stromversorgung der beiden Heizelemente sind die beiden CNT-Schichten mit Zuleitungskontaktierungen ausgestattet, die ebenso wie im vorigen Ausführungsbeispiel beschrieben zu Kontaktelementen in einem Steckerelement an einer Rückseite der Garraumeinheit geführt sind. Die beiden Heizelemente der Garraumeinheit sind dazu vorgesehen, voneinander unabhängig angesteuert zu werden, was durch eine Einzelkontaktierung besonders einfach realisiert werden kann.

Fig. 5 zeigt ein weiteres Ausführungsbeispiel einer Garraumvorrichtung mit einer Garraumeinheit 76, die ein Heizelement 78 umfasst und dazu vorgesehen ist, eine Oberhitze oder eine Unterhitze eines Backofens zu bilden. Auf einer Oberfläche einer rechteckigen Platte 80 aus einem glaskeramischen Material ist das Heizelement 78 aufgebracht, das eine zwischen zwei elektrischen Isolierschichten 84, 86 angeordnete CNT-Schicht 82 mit CNT (Carbon Nano Tubes)-Bestandteilen aufweist. Die der CNT-Schicht 82 gegenüberliegende Oberfläche der rechteckigen Platte 80 aus einem glaskeramischen Material ist mit einer Metallfolie 88 bedeckt, die eine von dem Heizelement 78 erzeugte Infrarotstrahlung in hohem Maße reflektiert. An Seitenflächen der rechteckigen Platte 80 aus einem glaskeramischen Material ist ein umlaufendes Dichtungselement 90 angespritzt, das dazu vorgesehen ist, eine weitgehende Vermeidung eines Luftaustauschs bei einem Betrieb in dem Backofen zu bewirken.

Zur Stromversorgung des Heizelements ist die CNT-Schicht mit doppelten Zuleitungskontaktierungen ausgestattet, die elektrisch parallel zu Kontaktelementen zweier symmetrisch angeordneter Steckerelemente an der Rückseite der Garraumvorrichtung geführt sind. Durch eine 180 Grad-Drehung um eine Einschubrichtung kann die Garraumvorrichtung wahlweise als Unterhitze oder als Oberhitze eingesetzt werden, wobei einer der beiden Steckerelemente zur Stromversorgung des Heizelements dient.

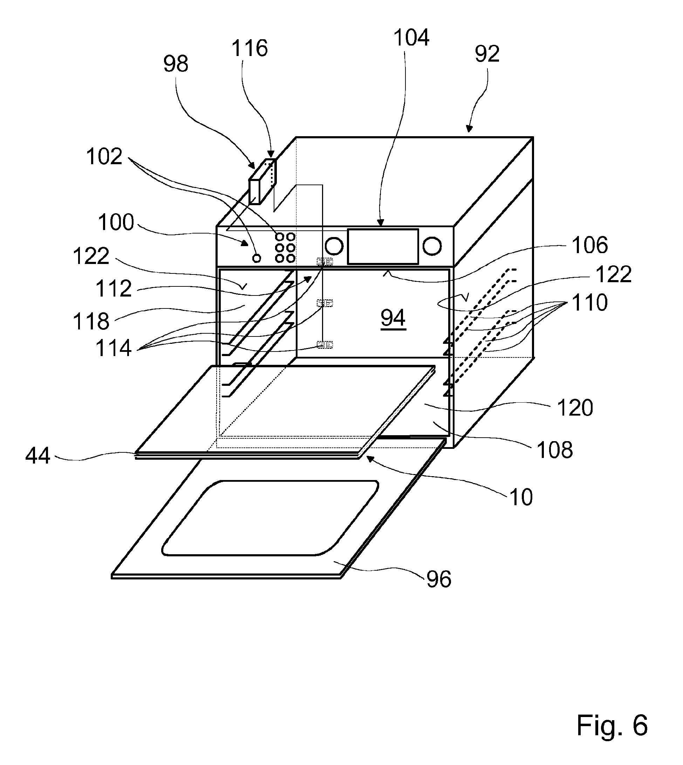

In der Fig. 6 ist ein von einem Backofen gebildetes Gargerät 92 mit einem Garraum 94 dargestellt, wobei der Garraum 94 mit einer Tür 96 verschließbar ist. Der Backofen weist eine Steuereinheit 98, eine Bedienungseinheit 100 und eine Anzeigeeinheit 104 auf und ist mit einer als Garraumteiler ausgebildeten Garraumeinheit 10 einer Garraumvorrichtung gemäß der Fig. 1 ausgestattet. Der Backofen umfasst weiterhin ein an sich bekanntes, in einer Garraumdecke 106 integriertes Heizelement zur Bereitstellung einer Oberhitze und ein an sich bekanntes, in einem Garraumboden 108 integriertes, unabhängig ansteuerbares Heizelement zur Bereitstellung einer Unterhitze. In zwei unterschiedlichen Höhen an beiden Seiten des Garraums 94 weist der Backofen an sich bekannte Führungselemente 110 auf, in die der Garraumteiler zur Veränderung einer Höhenposition eingeschoben werden kann.

Ferner weist der Backofen eine Stromversorgungseinheit 112 auf, die dazu vorgesehen ist, in zwei unterschiedlichen Höhenebenen des Garraums 94 eine elektrische Stromversorgung der als Garraumteiler ausgebildeten Garraumeinheit 10 der Garraumvorrichtung bereitzustellen. Die Stromversorgungseinheit 112 umfasst dazu an einer Rückseite des Garraums 94 in den beiden Höhenpositionen der Führungselemente 110 Steckerbuchsen 114, die mit dem Steckerelement 50 des Garraumteilers korrespondieren. In einer betriebsbereiten Position des Garraumteilers ist dieser mit dem Steckerelement 50, das an seiner Rückseite angeordnet ist, in einer der Steckerbuchsen 114 des Backofens eingesteckt und das an den Seitenflächen des Garraumteilers umlaufende Dichtungselement 44 dichtet den Garraumteiler gegen Seitenflächen 122 des Garraums 94, gegen die Rückwand des Garraums 94 und gegen eine geschlossene Tür 96 ab.

Des Weiteren umfasst der Backofen eine Sensiereinheit 116, die einteilig mit der Steuereinheit 98 ausgebildet ist. Die Sensiereinheit 116 ist an die an der Rückseite des Garraums 94 angeordneten Steckerbuchsen 114 kontaktiert und dazu vorgesehen, eine betriebsbereite Position der Garraumvorrichtung zu erfassen. Dazu erfasst die Sensiereinheit 116 einen elektrischen Widerstand jedes der beiden Heizelemente 12, 14 der Garraumvorrichtung und stellt der Steuereinheit 98 ein widerstandsproportionales Signal bereit. Die Steuereinheit 98 ist dazu vorgesehen, das widerstandsproportionale Signal der Sensiereinheit 116 auszuwerten und vergleicht dazu das Signal mit einem in einem seiner Speicherelemente hinterlegten Referenzwert. Bei einer Feststellung einer Übereinstimmung des Signals der Sensiereinheit 116 mit dem hinterlegten Wert innerhalb eines in der Steuereinheit 98 ebenfalls hinterlegten Toleranzbereichs ist die Steuereinheit 98 dazu vorgesehen, aufgrund des Signals der Sensiereinheit 116 von einem Betriebsmodus in einen anderen Betriebsmodus zu wechseln und diesen Wechsel, in diesem Fall von einem herkömmlichen Backofenbetrieb mit einer durch das integrierte Heizelement bereitgestellten Oberhitze und im Garraumboden integrierten Heizelement zur Bereitstellung einer Unterhitze zu einem möglichen Doppelbackofenbetrieb mit unabhängig steuerbarer Oberhitze und Unterhitze in zwei Teilgarräumen 118, 120 unterhalb und oberhalb des Garraumteilers, mit entsprechenden Symbolen in der Anzeigeeinheit 104 anzuzeigen, wobei die Anzeige auch Veränderungen von Funktionseigenschaften von Bedienelementen 102 umfasst, indem ein Skalenbereich eines Bedienelements zur Temperatureinstellung an den neuen Betriebsmodus angepasst ist.

### Bezugszeichen

- 10: Garraumeinheit
- 12: Heizelement
- 14: Heizelement
- 16: CNT-Schicht
- 18: CNT-Schicht
- 20: elektrische Isolierschicht
- 22: elektrische Isolierschicht
- 24: Platte
- 26: Platte
- 28: thermische Isolationsschicht
- 30: Metallfolie
- 32: Metallfolie
- 34: Schaumglas
- 36: Metallrahmen
- 38: Halbrahmen
- 40: Halbrahmen
- 42: Überlappungsstelle
- 44: Dichtungselement
- 46: Zuleitungskontaktierung
- 48: Kontaktelement
- 50: Steckerelement
- 52: Garraumeinheit
- 54: Heizelement
- 56: Heizelement
- 58: CNT-Schicht
- 60: CNT-Schicht
- 62: elektrische Isolierschicht

- 64: elektrische Isolierschicht
- 66: Oberfläche
- 68: Oberfläche
- 70: Platte
- 72: Halbschale
- 74: Dichtungselement
- 76: Garraumeinheit
- 78: Heizelement
- 80: Platte
- 82: CNT-Schicht
- 84: elektrische Isolierschicht
- 86: elektrische Isolierschicht
- 88: Metallfolie
- 90: Dichtungselement
- 92: Gargerät
- 94: Garraum
- 96: Tür
- 98: Steuereinheit
- 100: Bedienungseinheit
- 102: Bedienelement
- 104: Anzeigeeinheit
- 106: Garraumdecke
- 108: Garraumboden
- 110: Führungselement
- 112: Stromversorgungseinheit
- 114: Steckerbuchse
- 116: Sensiereinheit
- 118: Teilgarraum
- 120: Teilgarraum
- 122: Seitenfläche

## Patentansprüche

1. Garraumvorrichtung mit zumindest einer Garraumeinheit (10; 52; 76), die zumindest ein Heizelement (12, 14; 54, 56; 78) aufweist,
**dadurch gekennzeichnet, dass**
das zumindest eine Heizelement (12, 14; 54, 56; 78) zumindest eine CNT-Schicht (16, 18; 58, 60; 82) aufweist, die CNT (Carbon Nano Tubes)-Bestandteile umfasst.

2. Garraumvorrichtung nach Anspruch 1,
**dadurch gekennzeichnet, dass**
die zumindest eine Garraumeinheit (10; 52; 76) neben der zumindest einen CNT-Schicht (16, 18; 58, 60; 82) zumindest eine Schicht aus einem glaskeramischen Material umfasst.

3. Garraumvorrichtung nach Anspruch 1 oder 2,
**dadurch gekennzeichnet, dass**
die zumindest eine Garraumeinheit (10; 52; 76) zumindest eine Schicht aus einem metallischen Werkstoff umfasst.

4. Garraumvorrichtung nach einem der vorhergehenden Ansprüche,
**dadurch gekennzeichnet, dass**
die zumindest eine Garraumeinheit (10; 52; 76) ein Gehäuse aus einem metallischen Werkstoff umfasst.

5. Garraumvorrichtung nach Anspruch 3 oder 4,
**dadurch gekennzeichnet, dass**
das Gehäuse aus einem metallischen Werkstoff und die zumindest eine Schicht aus einem metallischen Werkstoff einteilig ausgebildet sind oder das Gehäuse in direktem elektrischen und/oder thermischen Kontakt mit der zumindest einen Schicht aus einem metallischen Werkstoff verbunden ist.

6. Garraumvorrichtung nach einem der vorhergehenden Ansprüche,
**dadurch gekennzeichnet, dass**
die zumindest eine Garraumeinheit (10; 52; 76) zumindest zwei Heizelemente (12, 14; 54, 56; 78) umfasst.

7. Garraumvorrichtung nach Anspruch 6,
**dadurch gekennzeichnet, dass**
die zumindest zwei Heizelemente (12, 14; 54, 56; 78) der zumindest einen Garraumeinheit (10; 52; 76) dazu vorgesehen sind, voneinander unabhängig angesteuert zu werden.

8. Garraumvorrichtung zumindest nach Anspruch 6,
**dadurch gekennzeichnet, dass**
zwischen den zumindest zwei Heizelementen (12, 14; 54, 56; 78) zumindest eine thermische Isolationsschicht (28) angeordnet ist.

9. Garraumvorrichtung nach einem der vorhergehenden Ansprüche,
**dadurch gekennzeichnet, dass**
die zumindest eine Garraumeinheit (10; 52; 76) ein an einem Außenrand im Wesentlichen umlaufendes Dichtungselement (44; 74; 90) aufweist.

10. Garraumvorrichtung nach einem der vorhergehenden Ansprüche,
**dadurch gekennzeichnet, dass**
die zumindest eine Garraumeinheit (10; 52; 76) als Garraumteiler ausgebildet ist.

11. Garraumvorrichtung nach einem der vorhergehenden Ansprüche,
**dadurch gekennzeichnet, dass**
die zumindest eine Garraumeinheit (10; 52; 76) eine Bauhöhe von weniger als 16 mm aufweist.

12. Gargerät (92), insbesondere Backofen, mit einem Garraum (94) und mit zumindest einer Garraumvorrichtung nach einem der vorhergehenden Ansprüche,
**gekennzeichnet durch**
eine Stromversorgungseinheit (112), die dazu vorgesehen ist, in zumindest zwei unterschiedlichen Höhenebenen des Garraums (94) eine elektrische Stromversorgung der zumindest einen Garraumvorrichtung bereitzustellen.

13. Gargerät nach Anspruch 12,
**gekennzeichnet durch**
zumindest eine Sensiereinheit (116), die dazu vorgesehen ist, eine betriebsbereite Position der zumindest einen Garraumvorrichtung zu erfassen.

14. Gargerät nach Anspruch 13,
**gekennzeichnet durch**
eine Steuereinheit (98), die dazu vorgesehen ist, zumindest aufgrund eines Signals der Sensiereinheit (116) von einem Betriebsmodus in einen anderen Betriebsmodus zu wechseln.
